# EUROPÄISCHE PATENTANMELDUNG

(11) **EP 0 884 255 A2**
(43) Veröffentlichungstag der Anmeldung: **16.12.1998**
(21) Anmeldenummer: 98109145.7
(22) Anmeldetag: 20.05.1998
(51) Int. Cl.: B65G 69/16, B65B 39/00, B65G 11/02, B65G 11/14, B65G 11/18, B65B 39/12

(54) **Vorrichtung zum vertikalen Transferieren von Tabletten**

(30) Priorität: 12.06.1997 DE 19724907
(71) Anmelder: GEI GmbH, 79379 Müllheim (DE)
(72) Erfinder: Untch, Günther, 79379 Müllheim/Baden (DE)
(74) Vertreter: Goddar, Heinz J., Dr.

(57) **Zusammenfassung**

Diese Erfindung betrifft eine Vorrichtung zum Transferieren von Tabletten (2) mit einem im wesentlichen vertikal angeordneten Tubussystem (11), dessen Tabletteneinlaß (12) im wesentlichen kontinuierlich Tabletten zuführbar sind und dessen an seinem unteren, verschließbaren Ende vorgesehener Tablettenauslaß (16) mit geringem Abstand oberhalb der Auftreffposition von aus dem Tubussystem unter Schwerkraftwirkung abgegebenen Tabletten angeordnet ist, wobei der Abstand zwischen dem Tabletteneinlaß und dem Tablettenauslaß des Tubussystems derart regelbar ist, daß der Abstand zwischen dem Tabletteneinlaß und der jeweils obersten Tablette im Tubussystem einerseits und der Abstand zwischen dem Tablettenauslaß und der Auftreffposition andererseits zumindest einen einstellbaren Maximalwert nicht übersteigt.

## Beschreibung

Die Erfindung betrifft eine Vorrichtung zum Transferieren von Tabletten mit einem im wesentlichen vertikal angeordneten Tubussystem, dessen Tabletteneinlaß im wesentlichen kontinuierlich Ta-bletten zufuhrbar sind und dessen an seinem unteren, verschließbaren Ende vorgesehener Tablettenauslaß mit geringem Abstand oberhalb der Auftreffposition von aus dem Tubussystem unter Schwerkraftwirkung abgegebenen Tabletten angeordnet ist.

Tabletten werden im allgemeinen mittels Tablettierpressen mit großer Produktionsgeschwindigkeit kontinuierlich hergestellt und zum Aufsammeln und Weitertransportieren in Behältern mit einem Fassungsvermögen von bis zu 600 Liter, auch im automatischen Betrieb, zwischengelagert. Das Eintragen der Tabletten in die Behälter, die meist direkt oder schräg unter der Tablettierpresse angeordnet sind, erfolgt dabei in der Regel mittels Schwerkraft.

Da Tabletten je nach Sorte mehr oder weniger stark gepreßt und damit mehr oder weniger stark bruchgefährdet sind, ist beim Eintragen darauf zu achten, daß die Fallgeschwindigkeit der Tabletten bzw. die Fallhohe derselben einen entsprechenden Maximalwert nicht überschreitet. Zu diesem Zweck sind bislang eine Reihe von Vorrichtungen vorgeschlagen worden.

So sind einerseits Vorrichtungen bekannt, bei denen die Tabletten im freien Strom, so wie sie aus der Tablettierpresse kommen, fließen, wobei in dem zu füllenden Behälter ein bewegbarer Kolben für eine Beschränkung der Fallhöhe vorgesehen ist, siehe, beispielsweise, die WO 9626118 A; eine feste Tablettenwendel als Einbau in dem Behälter vorgesehen ist, die, beispielsweise, in Form von spiralförmigen Schächten ausgebildet ist, deren Seitenwände Vorsprünge zum Reduzieren eines Anstauens und Rückprallens von Tabletten aufweisen, wie in der US 5083651 A offenbart; eine Tablettenwendel mit senkrechter Mittelachse verwendet wird, die von der Tablettierpresse bis hinein in den Behälter führt und je nach Füllgrad, z.B. durch Absenken des Behälters, sukzessiv zurückgezogen wird, so daß der Auslaß der Wendel stets dicht über der Füllhöhe der Tabletten in dem Behälter liegt; eine Kaskade aus weichen, elastischen Materialien das Fallen der Tabletten immer wieder abbremsen und so vor Beschädigungen schützen; oder ein Tablettenfördersystem Tabletten portionsweise in den Behälter hineinträgt und dort mit einer geringen Fallhöhe abwirft, indem, beispielsweise, Tabletten in einem Rohr gestapelt und durch eine Wechselwirkung zwischen einem Halteglied und einer Vielzahl von Druckstiften gesteuert entladen werden, siehe JP 08230802 A. Andererseits sind auch Vorrichtungen bekannt, bei denen Tabletten in einem Rohr als Säule transportiert werden, wobei für das Beschicken von Konfektioniermaschinen ein Zuführrohr zu Beginn der Produktion mit Hilfsmitteln langsam gefüllt wird, indem die Tabletten sich jeweils oberhalb des Hilfsmittels ansammeln, langsam mit Absenken desselben weitergeführt und schließlich mit kleiner Geschwindigkeit entleert werden, entsprechend der Entnahme am unteren Ende des Rohrs.

Nachteilig bei diesen bekannten Vorrichtungen ist Jedoch, daß im Falle der durch den Einlaß eines Behälters hindurch wirkenden Systeme eine große Eintrittsöffnung in den Behälter benötigt wird und, sofern die Tabletten über Schrägen und Konturen abgebremst werden, oft nicht alle Tablettenformen und -größen in genügendem Ausmaß vor Beschädigungen geschützt werden, während die Vorrichtungen, die das Auffüllen eines Rohrs fordern, nur zwischen fixen Übergabepunkten einsetzbar sind und meist auch einen manuellen Eingriff am unteren Rohrenden erfordern.

Die Aufgabe der gegenwärtigen Erfindung ist, die gattungsgemäße Vorrichtung derart weiterzuentwickeln, daß sie die Nachteile des Stands der Technik überwindet, d. h., bei der insbesondere ein Fördersystem mit möglichst geringen Abmessungen zum im wesentlichen beschädigungsfreien Transferieren von Tabletten unterschiedlichster Größen und Formen, nicht auf fixierte Übergabepunkten beschränkt, zum Einsatz kommt. Dabei soll das Fördersystem auch einen einfachen Aufbau aufweisen und leicht zu reinigen sein.

Diese Aufgabe wird erfindungsgemäß dadurch gelöst, daß der Abstand zwischen dem Tabletteneinlaß und dem Tablettenauslaß des Tubussystems derart regelbar ist, daß der Abstand zwischen dem Tabletteneinlaß und der jeweils obersten Tablette im Tubussystem einerseits und der Abstand zwischen dem Tablettenauslaß und der Auftreffposition andererseits zumindest einen einstellbaren Maximalwert nicht übersteigt.

Dabei kann gemäß der Erfindung vorgesehen sein, daß die Regelung kontinuierlich zum Einstellen eines bestimmten Sollwerts oder schrittweise zum Einstellen eines bestimmten Sollbereichs ist.

Eine Ausführungsform der Erfindung ist gekennzeichnet durch zumindest einen dem Tabletteneinlaß zugeordneten ersten Abstandssensor zur im wesentlichen kontinuierlichen Ermittlung des Ist-Abstandes zwischen dem Tabletteneinlaß und der jeweils obersten Tablette im Tubussystem.

Eine andere Ausführungsform der Erfindung ist gekennzeichnet durch einen zweiten und einen dritten dem Tabletteneinlaß zugeordneten, vorzugsweise an einem Einschütttrichter oder einer Ausgabeeinrichtung von Tabletten angebrachten, Abstandssensor, wobei der zweite Abstandssensor oberhalb des dritten Abstandssensors angeordnet ist und im wesentlichen kontinuierlich überprüft, ob ein oberer Grenzwert für den Abstand zwischen dem Tabletteneinlaß und der jeweils obersten Tablette in dem Tubussystem überschritten ist, und der dritte Abstandssensor im wesentlichen kontinuierlich überprüft, ob ein unterer Grenzwert für den Abstand zwischen dem Tabletteneinlaß und der jeweils obersten Tablette in dem Tubussystem unterschritten ist.

Ferner schlägt die Erfindung eine weitere Ausführungsform vor, die gekennzeichnet ist durch einen dem Tablettenauslaß zugeordneten vierten Abstandssensor zur im wesentlichen kontinuierlichen Ermittlung des Ist-Abstands zwischen dem Tablettenauslaß und der Auftreffposition oder Überprüfen, ob ein Maximalwert für den Abstand zwischen dem Tablettenauslaß und der Auftreffposition überschritten ist.

Dabei kann erfindungsgemäß vorgesehen sein, daß der vierte Abstandssensor eine mit der dem Tablettenauslaß gegenüberliegenden Gegenfläche mechanisch in Kontakt bringbare Sensoreinrichtung, wie eine Distanzplatte oder dergleichen, aufweist.

Es wird auch vorgeschlagen, daß die dem Tabletcenauslaß gegenüberliegende Seite der Distanzplatte mit einem kegelförmigen Aufsatz verbunden ist.

Weiterhin ist erfindungsgemäß vorgeschlagen, daß die Distanzplatt und/oder der Aufsatz von einem Deckel für den Tablettenauslaß umfaßt ist.

Ebenfalls kann vorgesehen sein, daß die Distanzplatte weiches Silikon umfaßt.

Bevorzugt ist gemäß der Erfindung, daß der erste, zweite, dritte und/oder vierte Abstandssensor in Wirkverbindung mit einer Einrichtung zur Höhenverstellung des Tubussystems und/oder einer Einrichtung zum Öffnen und Schließen des Tablettenauslasses steht

Die Erfindung schlägt ferner vor, daß das Tubussystem an einen Behälter zum Be- oder Entladen von Tabletten über ein Andocksystem, vorzugsweise mit Drehklappenverschluß, andockbar ist.

Dabei kann vorgesehen sein, daß der Behälter an seinem Eingang und/oder seinem Ausgang ein Klappe, vorzugsweise eine Passivklappe, aufweist.

Nach der Erfindung kann auch vorgesehen sein, daß der Durchmesser der Tabletten im wesentlichen dem Innendurchmesser des Tubussystems entspricht.

Auch kann eine erste Hebe/Senkmechanik in Wirkverbindung mit dem Tubussystem gemäß der Erfindung vorgesehen sein.

Der Behälter kann auch mit einer zweiten Hebe/Senkmechanik in Wirkverbindung stehen.

Dabei schlägt die Erfindung vor, daß die erste und/oder zweite Hebe/Senkmechanik ein Pneumatiksystem und/oder ein Zahnstangengetriebe umfaßt.

Bevorzugt ist dabei, daß die erste und/oder zweite Hebe/Senkmechanik mit einem fünften die jeweilige Höhenstellung steuernden Sensor verbunden ist.

Eine erfindungsgemäße Weiterentwicklung ist dadurch gekennzeichnet, daß der Tabletteneinlaß des Tubussystems ortsfest ist.

Ferner schlägt die Erfindung vor, daß das Tubussystem ein Rohrsegment, ein Teleskoprohr, einen Faltbalg oder einen biegsamen, vorzugsweise auf- und abwickelbaren, Schlauch umfaßt.

Dabei kann vorgesehen sein, daß das Rohrsegment zumindest bereichsweise einen axialen Längsschnitt aufweist, in den im Bereich des Tabletteneinlasses eine Ausgabeeinrichtung von Tabletten oder ein Einschütttrichter seitlich eingreift und der außerhalb des Bereiches des Tabletteneinlasses durch ein im wesentlichen in vertikaler Richtung langgestrecktes Abdeckelement abdeckbar ist.

Auch kann vorgesehen sein, daß das Abdeckelement durch ein flexibles, zweiteiliges Bandelement gebildet und am Rohrsegment befestigt ist.

Schließlich schlägt die Erfindung auch vor, daß der Schlauch zumindest bereichsweise einen axialen Längsschlitz aufweist, in den im Bereich des Tabletteneinlasses eine Ausgabeeinrichtung von Tabletten oder ein Einschütttrichter so eingreift, daß der Schlauch ansonsten geschlossen ist.

Der Erfindung liegt somit die überraschende Erkenntnis zugrunde, daß die Vorteile einer Tablettensäulenförderung mit beliebigen Übergabepunkten realisierbar ist durch, vorzugsweise in Abhängigkeit von dem Füllstand und/oder der Position der Tablettensäule gesteuerte, Veränderung des Abstands zwischen dem Tabletteneinlaß und dem Tablettenauslaß eines Tubussystems.

Weitere Merkmale und Vorteile der Erfindung ergeben sich aus der nachstehenden Beschreibung, in der ein Ausführungsbeispiel der Erfindung anhand von schematischen Zeichnungen im einzelnen erläutert ist. Dabei zeigt:
- Figur 1: eine Schnittansicht einer erfindungsgemäßen Vorrichtung in ihrer Ausgangsposition;
- Figur 2: eine Schnittansicht der in Figur 1 gezeigten Vorrichtung in der tiefsten Eintauchposition eines tablettenfordernden Tubussystems in einem Behälter;
- Figur 3: eine Schnittansicht der in Figur 1 gezeigten Vorrichtung mit einem zum Teil mit Tabletten gefüllten Behälter;
- Figur 4: eine Draufsicht auf ein mit der in Figur 1 gezeigten Vorrichtung verwendetes Tablettenfördersystem;
- Figur 5: eine Draufsicht auf ein Andocksystem mit geöffneter Klappe zur Verwendung in der in Figur 1 gezeigten Vorrichtung; und
- Figur 6: eine Schnittansicht der in Figur 1 gezeigten Vorrichtung mit zwei Behältern.

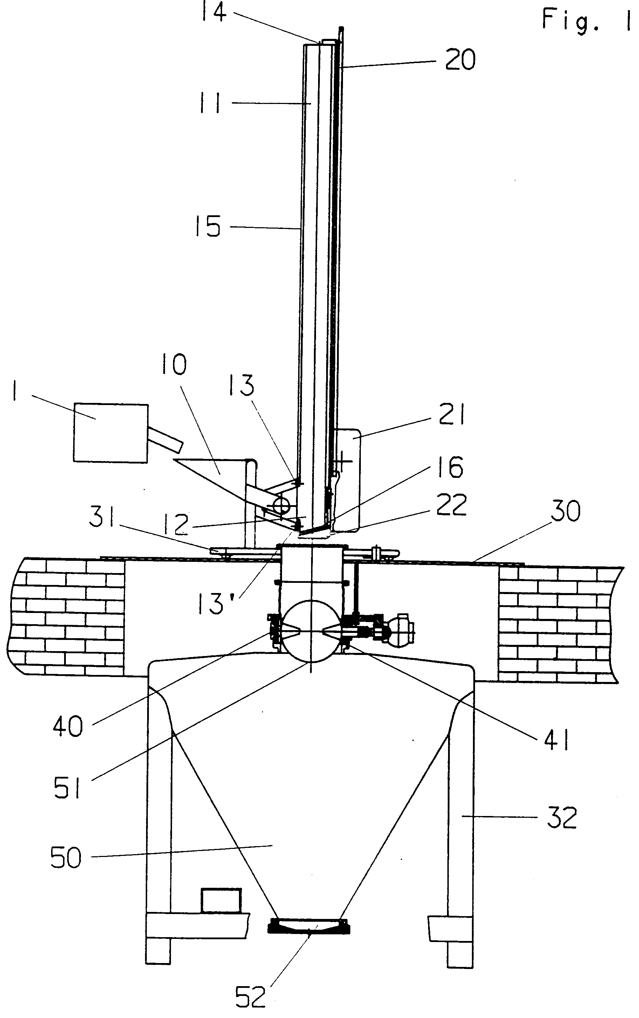

Wie den Figuren 1 bis 3 zu entnehmen ist, befindet sich eine Ausgabeeinrichtung 1 einer Tablettierpresse sowie ein Einschütttrichter 10 für die erfindungsgemäß schonende Tablettenführung oberhalb der Bodenplatte 30 eines Reinraums, während ein zu beladender Behälter 50 mit einem Eingang 51 und einem Ausgang 52 unterhalb der Bodenplatte 30 plazierbar ist. Zwischen dem Einschütttrichter 10 und dem Behälter 50 läßt sich ein Rohrsegment 11, ein Andocksystem 40, wie, beispielsweise, aus der DE 4342962 C2 bekannt, durchquerend, hoch- bzw. herunterfahren, wobei sein Tabletteneinlaß 12 ortsfest und sein Tablettenauslaß 16 hohenverstellbar ist.

Das Rohrsegment 11 ist längsverstellbar an einer Stange 20 befestigt, die an ihrem oberen Ende als Zahnstange ausgebildet ist, um über ein Zahnradgetriebe mittels eines pneumatischen Motors 21, der sich zur Hoch- bzw. Runterbewegung der Stange 20 immer um gleiche Drehwinkel bewegt, antreibbar zu sein.

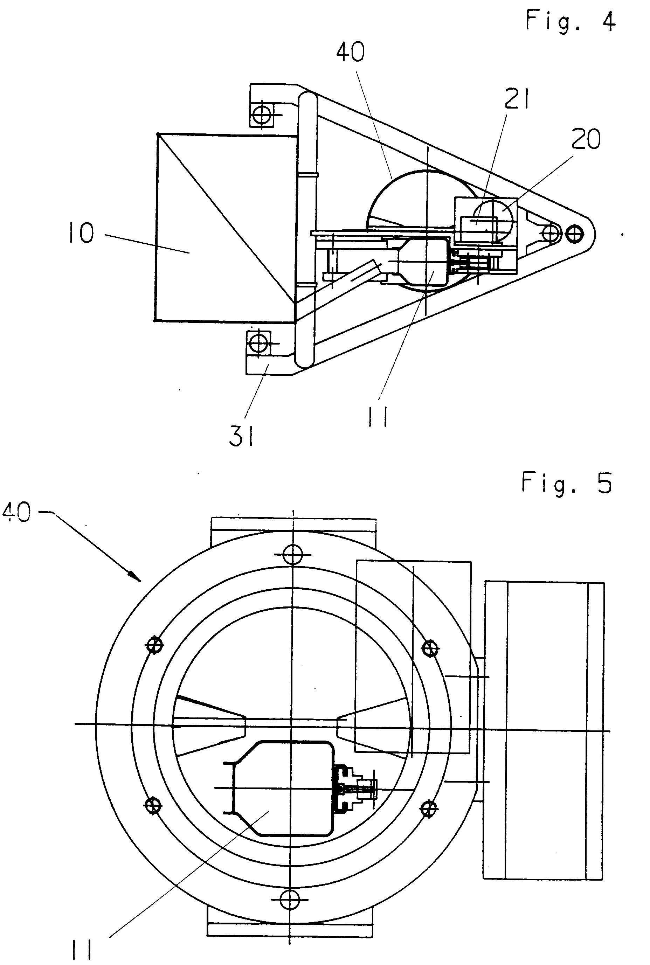

Die ortsfesten Teile oberhalb der Bodenplatte 30, nämlich der Einschütttrichter 10 und der Antrieb 21, sind in einem Gestell 31 gelagert, siehe zum Beispiel Figur 4, und der Behälter 50 ist in einem weiteren Gestell 32 gelagert.

Das Rohrsegment 11 weist einen Längsschnitt 14 auf, der durch ein Abdeckelement 15, insbesondere ein flexibles, zweiteiliges Bandelement, außerhalb des Tabletteneinlasses 12 abgedeckt ist, so daß beim Hoch- bzw. Runterfahren des Rohrsegments 11 relativ zum Tabletteneinlaß 12 die beiden Teile des Bandes 15 über die Außenkontur des Tabletteneinlasses 12 gleiten und darüber und darunter am Rohrsegment 11 anliegen, um den Längsschnitt 14 so weit zu schließen, daß keine Tabletten 2 herausfallen können.

An ihren in den Figuren 1 bis 3 gezeigten unteren Ende weist die Stange 20 einen Deckel mit einer Distanzplatte 22, vorzugsweise weiches Silikon umfassend, und, in Richtung des Tablettenauslasses 16, einem kegelförmigen Aufsatz 23 zum steuerbaren Verschließen des Tablettenauslasses 15 des Rohrsegments 11 auf. Dabei dient die Distanzplatte 22 dem Erfassen des Aufstoßens auf den Boden des Behälters 50 oder auf Tabletten 2 in dem Behälter 50 und der Aufsatz 23 dem Erleichtern des Ausfließens der Tabletten 2.

Zusätzlich zu der Distanzplatte 22 sind Abstandssensoren 13, 13' zur Regulierung der Höhe des Rohrsegments 11 sowie des Öffnens bzw. Verschließens des Tablettenauslasses 16 vorgesehen, die wie folgt zum Steuern der Tablettenführung zusammenarbeiten:

In seiner Ausgangsposition ist das Rohrsegment 11 in seiner obersten Position, d.h. der zur Ausgabeeinrichtung 1 ortsfeste Tabletteneinlaß 12 ist in seiner untersten Position relativ zu dem Rohrsegment 11, in der der Tabletteneinlaß 12 nicht mehr als ungefähr 20 cm oberhalb des Aufsatzes 23 des das Rohrsegment 11 verschließenden Deckels angeordnet ist, wie in Figur 1 gezeigt. In diesem Zustand ist auch die Klappe 41 des Andocksystems 40 am Eingang 51 des Behälters 50 verschlossen.

Sobald das Einfüllen der Tabletten 2 in das Rohrsegment 11 beginnt, wird es über die Abstandssensoren 13, 13' überwacht. Wenn der Abstandssensor 13 Tabletten 2 fühlt, wird das Rohrsegment 11 um einen gewissen Betrag, zwischen ungefähr 5 und 20 cm, herabgesenkt. Dieses Füllen und Herabsenken wird so lange wiederholt, bis die Distanzplatte 22 auf dem Boden des Behälters 50 im Bereich des Ausgangs 52 zu liegen kommt. Im Laufe dieser nach unten gerichteten Bewegung wird die Klappe 41 zum Andocken des Rohrsegments 11 an den Behälter 50 bzw. zum Einführen des Rohrsegments 11 in den Behälter 50 über einen Drehklappenverschluß geöffnet. Das geöffnet Andocksystem mit dadurch verlaufendem Rohrsegment 11 ist dabei in Figur 5 dargestellt.

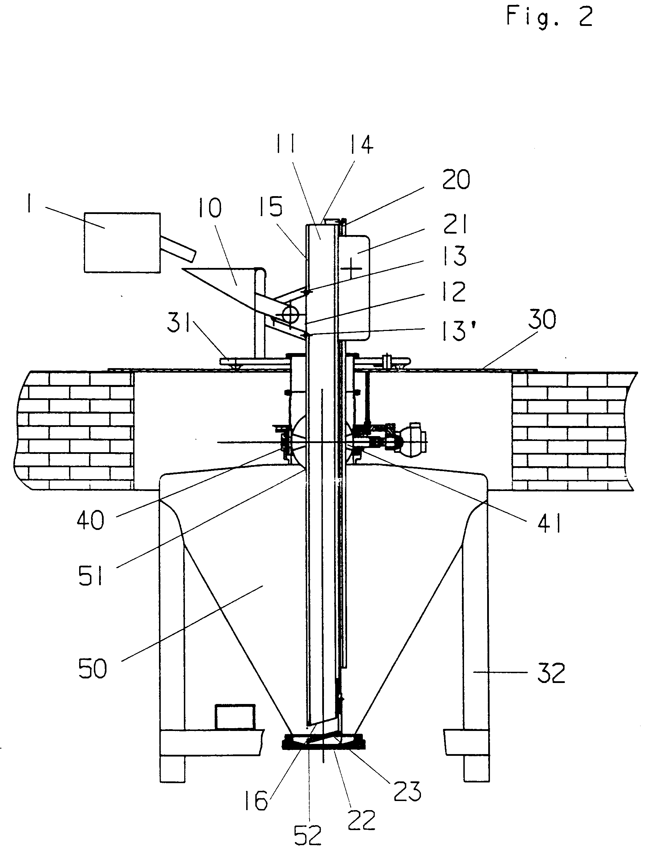

Als nächstes wird durch Anheben des Rohrsegments 11 der Tablettenauslaß 16 geöffnet, wobei ein Spalt zwischen dem Tablettenauslaß 16 und dem Aufsatz 23 von ungefähr 5 bis 20 cm entsteht, siehe Figur 2, in der die Tabletten 2 in dem Rohrsegment 11 der Übersichtlichkeit zuliebe nicht dargestellt sind. Sodann beginnen die Tabletten 2, aus dem Rohrsegment 11 herauszufließen.

Das Rohrsegment 11 wird um ein bestimmtes Ausmaß, beispielsweise 5 cm, angehoben, wenn entweder der Abstandssensor 13' keine Tablette 2 mehr fühlt oder zuvor der Tablettenstrom zum Stillstand kommt, da die angewachsene Füllhöhe im Behälter 50 ein Nachfließen verhindert, und sich daraufhin das Rohrsegment 11 nach oben füllt, bis der Abstandssensor 13 eine Tablette 2 fühlt.

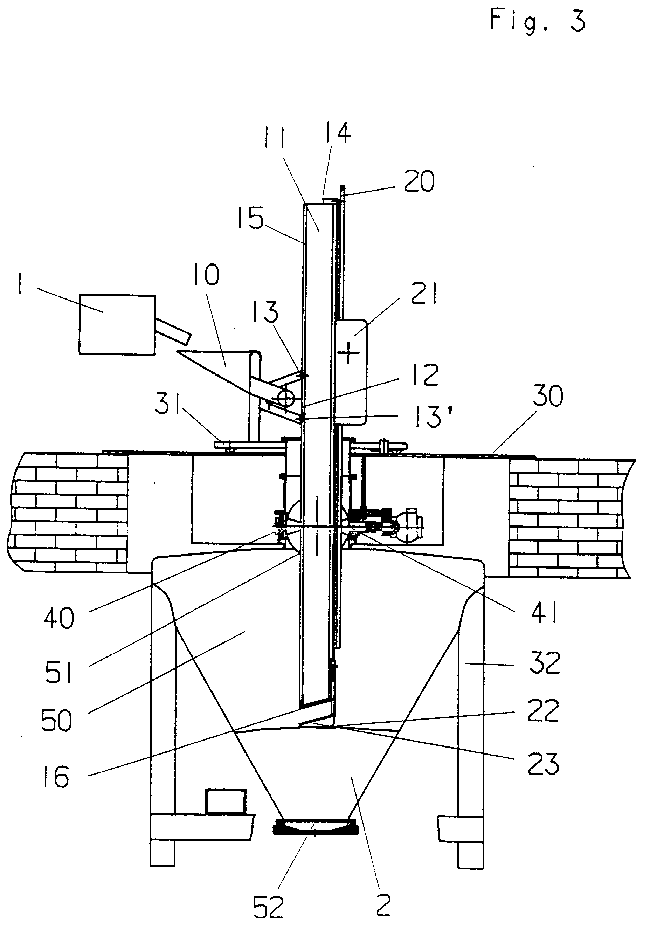

Dieses Anheben des Rohrsegments 11 und Herausfließen der Tabletten 2 wiederholt sich so lange, bis der Behälter 50 in dem gewünschten Ausmaß gefüllt ist, wobei ein Einfüllniveau in Figur 3, wieder ohne Tabletten 2 in dem Rohrsegment 11, dargestellt ist. Das Förderprinzip beruht somit darauf, daß beim Hochziehen des Rohrsegments 11 jeweils ein Mehrfaches an Tablette 2 ausfließt, als der Volumenänderung, die durch die Bewegung des Rohrsegments 11 auftritt, entspricht.

Sobald der Behälter 50 komplett gefüllt ist, wird das Rohrsegment von dem Behälter 50 abgedockt und die Klappe 51 verschließt den Behälter 50. Nach Füllen des Behälters 50 stellt sich auch die nicht gezeigte Tablettierpresse ab, und das Rohrsegment 11 zieht sich wieder in die in die Figur 1 gezeigte Grundposition zurück.

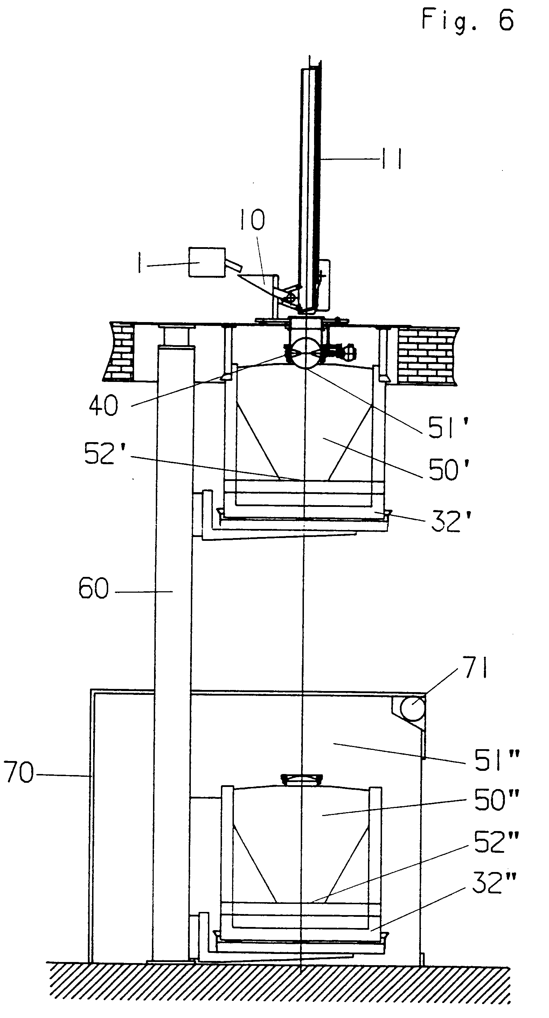

In Figur 6 ist dargestellt, daß ein Behälter 50' mit einem Eingang 51' und einem Ausgang 52' in einem Gestell 32' über eine Hubsäule 60 aus einer Schutzkabine 70 mit einem öffnenbaren Schrellauftor 71 in seine in Figur 6 dargestellte, oberste Position fahrbar ist, um mit Tabletten 2, wie zuvor beschrieben, gefüllt zu werden. Nach Füllen des Behälters 50' ist dieser wieder in die Schutzkabine 70 herabsenkbar, um aus der selben nach Bedarf entfernt zu werden.

Natürlich kann die erfindungsgemäße Vorrichtung zum Transferieren von Tabletten auch zwischen zwei Behältern 50', 50'' unter Zwischenschaltung eines Einschütttrichters 10 zwischen den Ausgang 52' des oberen Behälters 50' und den Tabletteneinlaß 12 des Rohrsegments 11 sowie eines Andocksystems 40 zwischen den Tabletteneinlaß 12 des Rohrsegments 11 und den Eingang 51'' des unteren Behälters 50'' in einem Gestell 32'' und durch Hoch- und Runterfahren des Rohrsegments 11, nämlich von dem Eingang 51'', zu dem Ausgang 52'' und wieder zurück zu dem Eingang 51'' des unteren, in Figur 6 gezeigten Behälters 50'', wie oben beschrieben, verwendet werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

### Bezugszeichenliste

- 1: Ausgabeeinrichtung einer Tablettierpresse
- 2: Tablette
- 10: Einschütttrichter
- 11: Rohrsegment
- 12: Tabletteneinlaß
- 13, 13': Abstandssensor
- 14: Längsschnitt
- 15: Abdeckelement
- 16: Tablettenauslaß
- 20: Stange
- 21: Antrieb
- 22: Distanzplatte
- 23: Aufsatz
- 30: Bodenplatte
- 31: Gestell
- 32, 32', 32'': Gestell
- 40: Andocksystem
- 41: Klappe
- 50, 50', 50'': Behälter
- 51, 51', 51'': Eingang
- 52, 52', 52'': Ausgang
- 60: Hubsäule
- 70: Schutzkabine
- 71: Schnellauftor

## Patentansprüche

1. Vorrichtung zum Transferieren von Tabletten mit einem im wesentlichen vertikal angeordneten Tubussystem, dessen Tabletteneinlaß im wesentlichen kontinuierlich Tabletten zuführbar sind und dessen an seinem unteren, verschließbaren Ende vorgesehener Tablettenauslaß mit geringem Abstand oberhalb der Auftreffposition von aus dem Tubussystem unter Schwerkraftwirkung abgegebenen Tabletten angeordnet ist, dadurch gekennzeichnet, daß der Abstand zwischen dem Tabletteneinlaß (12) und dem Tablettenauslaß (16) des Tubussystems (11) derart regelbar ist, daß der Abstand zwischen dem Tabletteneinlaß (12) und der jeweils obersten Tablette (2) im Tubussystem (11) einerseits und der Abstand zwischen dem Tablettenauslaß (16) und der Auftreffposition andererseits zumindest einen einstellbaren Maximalwert nicht übersteigt.

2. Vorrichtung nach Anspruch 1, dadurch gekennzeichnet, daß die Regelung kontinuierlich zum Einstellen eines bestimmten Sollwerts oder schrittweise zum Einstellen eines bestimmten Sollbereichs ist.

3. Vorrichtung nach Anspruch 1 oder 2, gekennzeichnet durch zumindest einen dem Tabletteneinlaß (12) zugeordneten ersten Abstandssensor zur im wesentlichen kontinuierlichen Ermittlung des Ist-Abstandes zwischen dem Tabletteneinlaß (12) und der jeweils obersten Tablette (2) im Tubussystem (11).

4. Vorrichtung nach Anspruch 1 oder 2, gekennzeichnet durch einen zweiten und einen dritten dem Tabletteneinlaß (12) zugeordneten, vorzugsweise an einem Einschütttrichter (10) oder einer Ausgabeeinrichtung (1) von Tabletten (2) angebrachten, Abstandssensor (13, 13'), wobei der zweite Abstandssensor (13) oberhalb des dritten Abstandssenors (13') angeordnet ist und im wesentlichen kontinuierlich überprüft, ob ein oberer Grenzwert für den Abstand zwischen dem Tabletteneinlaß (12) und der jeweils obersten Tablette (2) in dem Tubussystem (11) überschritten ist, und der dritte Abstandssensor (13') im wesentlichen kontinuierlich überprüft, ob ein unterer Grenzwert für den Abstand zwischen dem Tabletteneinlaß (12) und der jeweils obersten Tablette (2) in dem Tubussystem (11) unterschritten ist.

5. Vorrichtung nach einem der vorangehenden Ansprüche, gekennzeichnet durch einen dem Tablettenauslaß (16) zugeordneten vierten Abstandssensor (22) zur im wesentlichen kontinuierlichen Ermittlung des Ist-Abstands zwischen dem Tablettenauslaß (16) und der Auftreffposition oder Überprüfen, ob der Maximalwert für den Abstand zwischen dem Tablettenauslaß (16) und der Auftreffposition überschritten ist.

6. Vorrichtung nach Anspruch 5, dadurch gekennzeichnet, daß der vierte Abstandssensor eine mit der dem Tablettenauslaß (16) gegenüberliegenden Gegenfläche mechanisch in Kontakt bringbare Sensoreinrichtung, wie eine Distanzplatte (22) oder dergleichen, aufweist.

7. Vorrichtung nach Anspruch 6, dadurch gekennzeichnet, daß die dem Tablettenauslaß (16) gegenüberliegende Seite der Distanzplatte (22) min einem kegelförmigen Aufsatz (23) verbunden ist.

8. Vorrichtung nach Anspruch 6 oder 7, dadurch gekennzeichnet, daß die Distanzplatte (22) und/oder der Aufsatz (23) von einem Deckel für den Tablettenauslaß (16) umfaßt ist.

9. Vorrichtung nach einem der Ansprüche 6 bis 8, dadurch gekennzeichnet, daß die Distanzplatte (22) weiches Silikon umfaßt.

10. Vorrichtung nach einem der Ansprüche 3 bis 9, dadurch gekennzeichnet, daß der erste, zweite, dritte und/oder vierte Abstandssensor (13, 13', 22) in Wirkverbindung mit einer Einrichtung zur Höhenverstellung des Tubussystems (11) und/oder einer Einrichtung zum Öffnen und Schließen des Tablettenauslasses (16) steht.

11. Vorrichtung nach einem der vorangehenden Ansprüche, dadurch gekennzeichnet, daß das Tubussystem (11) an einen Behälter (50, 50', 50'') zum Be- oder Entladen von Tabletten (2) über ein Andocksystem (40), vorzugsweise mit Drehklappenverschluß, andockbar ist.

12. Vorrichtung nach Anspruch 11, dadurch gekennzeichnet, daß der Behälter (50, 50', 50'') an seinem Eingang (51, 51', 51'') und/oder seinem Ausgang (52, 52', 52'') ein Klappe, vorzugsweise eine Passivklappe, aufweist.

13. Vorrichtung nach einem der vorangehenden Ansprüche, dadurch gekennzeichnet, daß der Durchmesser der Tabletten (2) im wesentlichen dem Innendurchmesser des Tubussystems (11) entspricht.

14. Vorrichtung nach einem der vorangehenden Ansprüche, gekennzeichnet durch eine erste Hebe/Senkmechanik (20, 21) in Wirkverbindung mit dem Tubussystem (11).

15. Vorrichtung nach einem der Ansprüche 11 bis 14, dadurch gekennzeichnet, daß der Behälter (50', 50'') mit einer zweiten Hebe/Senkmechanik (60) in Wirkverbindung steht.

16. Vorrichtung nach Anspruch 14 oder 15, dadurch gekennzeichnet, daß die erste und/oder zweite Hebe/Senkmechanik (21, 21, 60) ein Pneumatiksystem und/oder ein Zahnstangengetriebe umfaßt.

17. Vorrichtung nach einem der Ansprüche 14 bis 16, dadurch gekennzeichnet, daß die erste und/oder zweite Hebe/Senkmechanik (20, 21, 60) mit einem fünften die jeweilige Höhenstellung steuernden Sensor verbunden ist.

18. Vorrichtung nach einem der vorancehenden Ansprüche, dadurch gekennzeichnet, daß der Tabletteneinlaß (12) des Tubussystems (11) ortsfest ist.

19. Vorrichtung nach einem der vorangehenden Ansprüche, dadurch gekennzeichnet, daß das Tubussystem ein Rohrsegment (11), ein Teleskoprohr, einen Faltbalg oder einen biegsamen, vorzugsweise auf- und abwickelbaren, Schlauch umfaßt.

20. Vorrichtung nach Anspruch 19, dadurch gekennzeichnet, daß das Rohrsegment (11) zumindest bereichsweise einen axialen Längsschnitt (14) aufweist, in den im Bereich des Tabletteneinlasses (12) eine Ausgabeeinrichtung (1) von Tabletten oder ein Einschütttrichter (10) seitlich eingreift und der außerhalb des Bereiches des Tabletteneinlasses (12) durch ein im wesentlichen in vertikaler Richtung langgestrecktes Abdeckelement (15) abdeckbar ist.

21. Vorrichtung nach Anspruch 20, dadurch gekennzeichnet, daß das Abdeckelement (15) durch ein flexibles, zweiteiliges Bandelement gebildet und am Rohrsegment (11) befestigt ist.

22. Vorrichtung nach Anspruch 19, dadurch gekennzeichnet, daß der Schlauch zumindest bereichsweise einen axialen Längsschlitz aufweist, in den im Bereich des Tabletteneinlasses (12) eine Ausgabeeinrichtung (1) von Tabletten oder ein Einschütttrichter (10) so eingreift, daß der Schlauch ansonsten geschlossen ist.
